# EUROPEAN PATENT APPLICATION

(11) **EP 4 769 647 A1**
(43) Date of publication of application: **01.07.2026**
(21) Application number: 25820156.5
(22) Date of filing: 05.06.2025
(51) Int. Cl.: H01M 10/54

(54) **METHOD FOR RECOVERING POSITIVE ELECTRODE ACTIVE MATERIAL**

(30) Priority: 05.06.2024 KR 20240074043
(71) Applicant: LG ENERGY SOLUTION, LTD., Seoul 07335 (KR)
(72) Inventor: JANG, Eun Su, Yuseong-gu Daejeon 34122 (KR); SEONG, Jie Hyun, Yuseong-gu Daejeon 34122 (KR)
(74) Representative: Hoffmann Eitle
(86) International application number: PCT/KR2025/007718
(87) International publication number: WO 2025/254470

(57) **Abstract**

The present invention relates to a method for recovering a positive electrode active material, and the method for recovering the positive electrode active material according to the present invention includes a first step of immersing a positive electrode, including a positive electrode current collector and a positive electrode composite layer containing a positive electrode active material and a binder, in an organic solvent capable of dissolving the binder to separate the positive electrode composite layer and the positive electrode current collector; a second step of removing the positive electrode current collector to obtain a first treatment solution including the positive electrode active material, the binder, and the organic solvent; a third step of removing at least some of the organic solvent included in the first treatment solution; a fourth step of precipitating the binder by adding water to the first treatment solution and separating the precipitated binder to obtain a second treatment solution including the positive electrode active material, the water, and the organic solvent; a fifth step of separating the positive electrode active material from the second treatment solution to obtain a third treatment solution including the water and the organic solvent; and a sixth step of removing the water from the third treatment solution and recovering the organic solvent.

## Description

### TECHNICAL FIELD

This application claims priority from Korean Patent Application No. 10-2024-0074043, filed on June 5, 2024, the disclosure of which is incorporated by reference herein.

The present invention relates to a method for recovering a positive electrode active material from a positive electrode of a waste battery or a positive electrode scrap generated in a process of preparing a positive electrode.

### BACKGROUND ART

A lithium secondary battery is a secondary battery generally including a positive electrode containing a positive electrode active material, a negative electrode containing a negative electrode active material, a separator, and an electrolyte, and charged and discharged by intercalation-deintercalation of lithium ions. The lithium secondary battery has been applied in various fields as it has the advantages of having high energy density, high electromotive force, and exhibiting high capacity.

The positive electrode of the lithium secondary battery is prepared by forming a positive electrode composite layer including a positive electrode active material, a binder, etc. on a positive electrode current collector. At this time, the positive electrode active material includes a transition metal such as nickel, cobalt, manganese, etc., together with lithium, where the nickel and cobalt are relatively expensive metals, and particularly, since cobalt is produced in a limited number of countries, the cobalt is known worldwide as a metal with unstable supply and demand. Therefore, in a case where the positive electrode active material is recovered from a waste positive electrode or a positive electrode scrap generated during a process of preparing the positive electrode, and reused as a raw material, price competitiveness may be ensured, and also, it is possible to generate additional income. Recently, researches for recovering and recycling the positive electrode active material from a waste battery or a positive electrode scrap generated during a process of preparing a battery have been conducted.

A conventionally-applied method is to grind a positive electrode of a waste battery or a positive electrode scrap into powder, then perform a pre-treatment process for sorting and pulverizing a positive electrode composite layer, then remove a binder through a heat treatment, and then add an acid solution to extract a valuable metal.

However, in case of the mechanical grinding method, there is a risk of fire and dust explosion when a lithium metal included in micrometer-level fine powder is in contact with moisture, and since the finally recovered powder includes a material contained in a positive electrode current collector (for example, aluminum) as impurities in large amount as the positive electrode current collector is also ground together during the grinding, a separate purification process needs to be performed in order to remove the impurities from the recovered powder, which causes a problem of reducing the recovery rate of valuable metal due to loss of the valuable metal during the purification process.

In addition, according to the conventional method, since poisonous hydrogen fluoride gas is generated during the heat treatment for removing the binder, an additional gas treatment facility needs to be established in order to treat the hydrogen fluoride gas, thereby causing a problem of increasing the process cost.

Therefore, development of a method for effectively recovering a positive electrode active material with reduced process cost is required.

### DISCLOSURE OF THE INVENTION

### TECHNICAL PROBLEM

To solve the above-mentioned problem, the present invention is to provide a method for recovering a positive electrode active material which is environmentally friendly without generating poisonous gas, provides excellent work safety, and costs relatively less.

### TECHNICAL SOLUTION

An aspect of the present invention provides a method for recovering a positive electrode active material including a first step of immersing a positive electrode, including a positive electrode current collector and a positive electrode composite layer containing a positive electrode active material and a binder, in an organic solvent capable of dissolving the binder to separate the positive electrode composite layer and the positive electrode current collector; a second step of removing the positive electrode current collector to obtain a first treatment solution including the positive electrode active material, the binder, and the organic solvent; a third step of removing at least some of the organic solvent included in the first treatment solution; a fourth step of precipitating the binder by adding water to the first treatment solution and separating the precipitated binder to obtain a second treatment solution including the positive electrode active material, the water, and the organic solvent; a fifth step of separating the positive electrode active material from the second treatment solution to obtain a third treatment solution including the water and the organic solvent; and a sixth step of removing the water from the third treatment solution and recovering the organic solvent.

At this time, the organic solvent may be, for example, N-methyl pyrrolidone, and the first step may be performed by applying heat and/or oscillation.

In the first step, the immersion may be performed for 10 minutes to 200 minutes, preferably 20 minutes to 180 minutes, and more preferably 40 minutes to 180 minutes.

Meanwhile, in the second step, the binder may be adsorbed onto the positive electrode active material to form a precipitate, and in this case, the third step may be performed by a method of removing a supernatant liquid of the first treatment solution.

Alternatively, the third step may be performed by a method of filtering the first treatment solution to remove only the organic solvent selectively.

It is preferable that the third step is performed such that a solid content in the first treatment solution becomes 10 wt% to 95 wt% after the removing of the organic solvent.

Meanwhile, in the fourth step, it is preferable that the water is added in an amount of 5 vol% to 95 vol% on the basis of the total volume of the first treatment solution.

Next, in the fifth step, the separating of the positive electrode active material from the second treatment solution may be performed by a method of immersing the positive electrode active material in the second treatment solution and then performing a gravity separation, or by a method of filtering the second treatment solution.

As needed, after the fifth step, a step of washing and drying the positive electrode active material, separated from the second treatment solution, may be further included.

The sixth step may be performed by a method of performing a fractional distillation on the third treatment solution. The organic solvent obtained in the sixth step may be reused in the first step.

### Advantageous Effects

In a method for recovering a positive electrode active material according to the present invention, since separation of a positive electrode current collector and a positive electrode composite layer is performed by a method of immersing a positive electrode in an organic solvent capable of dissolving a binder to dissolve the binder, without a grinding process being used, dust generation, explosion, or the like may be suppressed, so that work safety is excellent.

In addition, since the binder is separated through a process of crystallization precipitation, not a heat treatment, in the method for recovering the positive electrode active material according to the present invention, poisonous hydrogen fluoride gas is not generated, which is environmentally friendly.

In addition, in the method for recovering the positive electrode active material according to the present invention, since a process of removing at least some of the organic solvent from a first treatment solution is performed after a positive electrode current collector is removed, so that the reactivity between water and the binder increases, the amount of water used for precipitation of the binder may be reduced, and the amount of energy consumed for distillation of the water and organic solvent, during a fractional distillation of a third treatment solution, may be reduced.

Furthermore, process costs for the positive electrode active material according to the present invention is low because expensive facilities such as a grinding equipment or gas treatment equipment are not required.

### BRIEF DESCRIPTION OF THE DRAWINGS

FIG. 1 illustrates photographs showing a state of a positive electrode current collector taken out from an N-methyl pyrrolidone solvent, where a positive electrode has been immersed, after a certain period of time has passed without an ultrasonic treatment.
FIG. 2 illustrates photographs showing a state of a positive electrode current collector taken out from an N-methyl pyrrolidone solvent, where a positive electrode has been immersed, after a certain period of time has passed since irradiated with ultrasonic waves for 20 minutes.

### MODE FOR CARRYING OUT THE INVENTION

Hereinafter, the present invention will be described in more detail.

A method for recovering a positive electrode active material according to the present invention includes (1) a first step of immersing a positive electrode, including a positive electrode current collector and a positive electrode composite layer containing a positive electrode active material and a binder, in an organic solvent capable of dissolving the binder to separate the positive electrode composite layer and the positive electrode current collector; (2) a second step of removing the positive electrode current collector to obtain a first treatment solution including the positive electrode active material, the binder, and the organic solvent; (3) a third step of removing at least some of the organic solvent included in the first treatment solution; (4) a fourth step of precipitating the binder by adding water to the first treatment solution and separating the precipitated binder to obtain a second treatment solution including the positive electrode active material, the water, and the organic solvent; (5) a fifth step of separating the positive electrode active material from the second treatment solution to obtain a third treatment solution including the water and the organic solvent; and (6) a sixth step of removing the water from the third treatment solution and recovering the organic solvent.

### (1) First Step: Separating Positive Electrode Current Collector

First, a positive electrode is immersed in an organic solvent capable of dissolving a binder.

At this time, the positive electrode may be a positive electrode separated from a waste battery, or a positive electrode scrap generated during a process of preparing the positive electrode.

The positive electrode includes a positive electrode current collector and a positive electrode composite layer formed on one side or both sides of the positive electrode current collector. At this time, the positive electrode current collector may be a positive electrode current collector generally used in the relevant technical field, which may include, for example, an aluminum-alloy foil, a stainless-steel foil, a nickel-alloy foil, or an aluminum foil or stainless-steel foil surface-treated with carbon, nickel, titanium, silver, etc., and preferably, an aluminum-alloy foil. The positive electrode composite layer may include a positive electrode active material and a binder, and as needed, may further include a conductive material, a dispersant, etc. The positive electrode active material may be a positive electrode active material generally used in the relevant technical field, which may include, for example, lithium iron phosphate; a lithium cobalt-based oxide; a lithium manganese-based oxide; a lithium nickel-based composite transition metal oxide such as a lithium nickel-cobalt-manganese oxide, a lithium nickel-cobalt-aluminum oxide, and a lithium nickel-cobalt-manganese-aluminum oxide, or a combination thereof, and preferably, may include a lithium nickel-based composite transition metal oxide.

The binder is for binding the positive electrode current collector and positive electrode active material particles, and may include various binders generally used in the relevant technical field, for example, polyvinylidene fluoride (PVDF), vinylidene fluoride-hexafluoropropylene copolymer (PVDF-co-HFP), polytetrafluoroethylene (PTFE), polyethylene, polypropylene, an ethylene-propylene-diene monomer rubber (EPDM rubber), a sulfonated-EPDM, or a combination thereof, and preferably, polyvinylidene fluoride.

Meanwhile, the organic solvent is a solvent capable of dissolving the binder included in the positive electrode composite layer, which may include, for example, N-methyl pyrrolidone (NMP), dimethyl sulfoxide (DMSO), isopropyl alcohol, etc., and preferably, N-methyl pyrrolidone.

When the positive electrode is immersed in the above-described organic solvent, the binder is dissolved by the organic solvent, and adhesion between the positive electrode current collector and the positive electrode active material particles is lost, so that the positive electrode current collector and the positive electrode active material become separated.

The immersion may be performed until the binder is sufficiently dissolved, and for example, performed for 40 minutes to 200 minutes, and preferably, for 40 minutes to 180 minutes.

Meanwhile, after the immersion, as needed, a step of applying heat and/or oscillation may be further performed. In case of applying heat to the organic solvent, dissolution of the binder in the organic solvent may be accelerated, and in case of applying oscillation, the separation of the positive electrode composite layer from the positive electrode current collector may be accelerated, thereby achieving effect of reducing the process time.

In particular, the step of applying the heat may be performed by a method of heating the organic solvent at 25 °C to 80 °C, preferably 50 °C to 70 °C, and more preferably 50 °C to 60 °C, and the step of applying the oscillation may be performed by a method of irradiating the organic solvent with ultrasonic waves or applying bubbling to the organic solvent to generate mechanical oscillation.

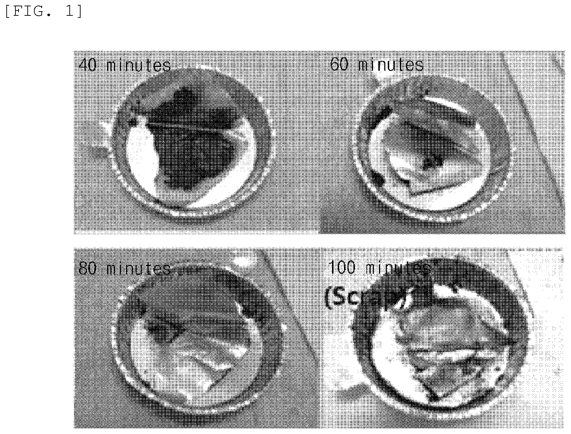

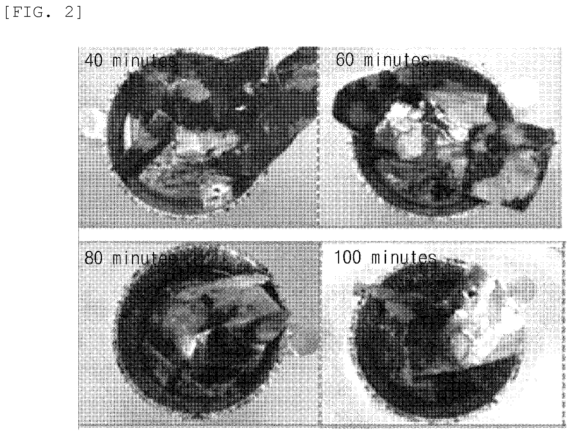

FIG. 1 illustrates photographs showing a state of the positive electrode current collector taken out from an N-methyl pyrrolidone solvent, where the positive electrode has been immersed, after a certain period of time has passed without an ultrasonic treatment. In addition, FIG. 2 illustrates photographs showing a state of the positive electrode current collector taken out from an N-methyl pyrrolidone solvent, where the positive electrode has been immersed, after a certain period of time has passed since irradiated with ultrasonic waves for 20 minutes.

Referring to FIGS. 1 and 2, it can be seen that, when immersed for 40 minutes without an ultrasonic treatment, the positive electrode composite layer (black powder) was barely separated from the positive electrode current collector, but on the contrary, when the ultrasonic treatment was performed, the positive electrode composite layer (black powder) was separated quite a lot even during the immersion for 40 minutes. This indicates that the separation of the positive electrode composite layer was accelerated by the ultrasonic treatment.

In case of separating the positive electrode current collector and the positive electrode composite layer in the above method, work safety is excellent without dust generation or occurrence of explosion.

### (2) Second Step: Removing Positive Electrode Current Collector

Once the positive electrode composite layer is sufficiently separated from the positive electrode current collector through the first step, the positive electrode current collector is removed, and a first treatment solution including the positive electrode active material, the binder, and the organic solvent is obtained.

In the first treatment solution that is a solution obtained after the positive electrode current collector is removed, the positive electrode active material and the binder may exist in a suspended state in the organic solvent, or an aggregate of the positive electrode active material and the binder may exist in a deposited state at the bottom of the first treatment solution.

In a case where the binder is completely dissolved in the organic solvent in the first step, the positive electrode active material and the binder may exist in a suspended state in the organic solvent, and in a case where the binder is not completely separated from the positive electrode active material, and is adsorbed onto a particle surface of the positive electrode active material, the positive electrode active material particles may stick together to form aggregates by the binder, and may thus exist in a state of precipitates deposited at the bottom of the first treatment solution.

### (3) Third Step: Removing Organic Solvent

Next, at least some of the organic solvent is removed from the first treatment solution. When at least some of the organic solvent is removed from the first treatment solution, the content of the organic solvent may decrease, increasing reactivity between water and the binder in the fourth step to be described later, thereby reducing the amount of water to be used for precipitation of the binder. Also, accordingly in the sixth step to be described later, the contents of water and organic solvent in the third treatment solution may decrease, thereby reducing the amount of energy consumption for distillation of the water and the organic solvent during fractional distillation.

The removing of the organic solvent may be performed by, for example, a method of removing a supernatant liquid of the first treatment solution, or a method of selectively removing the organic solvent by filtering.

In the case where the positive electrode active material and the binder exist in the state of precipitates in the first treatment solution, the organic solvent may be removed by a simple method of removing the supernatant liquid.

Meanwhile, in the case where the positive electrode active material and the binder exist in the suspended state in the first treatment solution, only the organic solvent, other than the positive electrode active material and the binder which are the solid content, may be removed selectively by filtering.

The third step may be performed such that the solid content in the first treatment solution, after the removing of the organic solvent, becomes 10 to 95 wt%, preferably 40 to 95 wt%, more preferably 60 to 95 wt%, and further more preferably 80 to 95 wt%. When the removed amount of the organic solvent falls within the above ranges, the amount of water to be required for precipitation of the binder in the fourth step, to be described later, may be effectively reduced. If the removed amount of the organic solvent is too large, there may be a problem that the separation of the binder is not smoothly carried out even through water is added in the following process.

### (4) Fourth Step: Separating Binder

Next, water is added to the first treatment solution in which at least some of the organic solvent is removed. When the binder such as PVDF or PVDF-co-HFP, dissolved in the organic solvent, reacts with water, the binder may crystallize and precipitate into a solid state.

At this time, it is preferable that the water is added in an amount of 5 vol% to 95 vol% on the basis of the total volume of the first treatment solution, preferably 10 to 90 vol%, more preferably 40 to 90 vol%, and further more preferably 60 to 90 vol%. When the amount of water added falls within the above ranges, the precipitation of the binder in the first treatment solution may occur smoothly. If the amount of water added is too small, the amount of the binder not precipitated may increase, so that it may be difficult to reuse the organic solvent, and if the amount of water added is too large, a lot of energy may be consumed in order to purify the organic solvent in the sixth step to be described later.

Once the binder is precipitated through the above process, the precipitated binder is separated. At this time, the separating of the binder may be performed, for example, in a method of removing the binder floating on a surface of the solution.

Once the precipitated binder is removed as described above, the positive electrode active material, the water, and the organic solvent exist in the remaining solution. The remaining solution including the positive electrode active material, the water, and the organic solvent is referred to as the second treatment solution for the convenience.

Meanwhile, the separating of the binder may be performed at least one time, and for example, performed 1 to 10 times, and preferably 1 to 5 times.

### (5) Fifth Step: Recovering Positive Electrode Active Material

Next, the positive electrode active material is separated from the second treatment solution, and a third treatment solution, including the water and the organic solvent, is obtained.

At this time, the separating of the positive electrode active material may be performed in various solid-liquid separation methods known to the relevant technical field. For example, a method of depositing the positive electrode active material in a solid phase and then separating the positive electrode active material from the second treatment solution through gravity separation, or a method of selectively releasing only the water and the organic solvent in a liquid phase from the second treatment solution through filtering, etc. may be used, but the method is not limited thereto.

Meanwhile, as needed, after the fifth step, a post-treatment process, such as washing, drying, and removing (purifying) impurities, may be further performed on the positive electrode active material separated from the second treatment solution.

The washing is to remove impurities from the surface of the positive electrode active material, which may be performed according to a method of washing the positive electrode active material generally known to the relevant technical field, and for example, the washing may be performed by a method of adding the positive electrode active material to water and agitating.

The drying is to remove the organic solvent and water remaining in the positive electrode active material, which may be performed, for example, by a method of drying the washed positive electrode active material at 80 °C to 140 °C, and preferably at 80 °C to 120 °C, but the method is not limited thereto. The temperature for the drying may vary according to the airflow, the degree of agitating, the partial pressure, etc. of a drying system.

The positive electrode active material obtained through the above-described post-treatment processes may be reused as a raw material of a battery, or may be used for recovering a valuable metal through an acid treatment, etc.

### (6) Sixth Step: Separating Organic Solvent

Next, the water is removed from the third treatment solution obtained in the fifth step, and the organic solvent is recovered. This step may be performed, for example, by a method of performing a fractional distillation on the third treatment solution. Since water and the organic solvent have different boiling points, the water and the organic solvent may be effectively separated through the fractional distillation, and the organic solvent, purified by a method of cooling the distilled organic solvent, may be recovered. The recovered organic solvent may be reused in the first step. In case of reusing the organic solvent as described above, consumption of the organic solvent may be reduced, thereby reducing the process cost.

## Claims

1. A method for recovering a positive electrode active material, comprising:
a first step of immersing a positive electrode, comprising a positive electrode current collector and a positive electrode composite layer comprising a positive electrode active material and a binder, in an organic solvent capable of dissolving the binder to separate the positive electrode composite layer and the positive electrode current collector;
a second step of removing the positive electrode current collector to obtain a first treatment solution comprising the positive electrode active material, the binder, and the organic solvent;
a third step of removing at least some of the organic solvent comprised in the first treatment solution;
a fourth step of precipitating the binder by adding water to the first treatment solution in which the at least some of the organic solvent is removed, and separating the precipitated binder to obtain a second treatment solution comprising the positive electrode active material, the water, and the organic solvent;
a fifth step of separating the positive electrode active material from the second treatment solution to obtain a third treatment solution comprising the water and the organic solvent; and
a sixth step of removing the water from the third treatment solution and recovering the organic solvent.

2. The method of claim 1, wherein the organic solvent is N-methyl pyrrolidone.

3. The method of claim 1, wherein the first step is performed by applying at least one of heat or oscillation.

4. The method of claim 1, wherein, in the second step, the binder is adsorbed onto the positive electrode active material to form a precipitate.

5. The method of claim 4, wherein the third step is performed by a method of removing a supernatant liquid of the first treatment solution.

6. The method of claim 1, wherein the third step is performed by a method of filtering the first treatment solution to remove only the organic solvent selectively.

7. The method of claim 1, wherein the third step is performed such that a solid content in the first treatment solution becomes 10 wt% to 95 wt% after the removing of the organic solvent.

8. The method of claim 1, wherein, in the fourth step, the water is added in an amount of 5 vol% to 95 vol% on the basis of a total volume of the first treatment solution.

9. The method of claim 1, wherein, in the fifth step, the separating of the positive electrode active material from the second treatment solution is performed by a method of immersing the positive electrode active material in the second treatment solution and then performing a gravity separation.

10. The method of claim 1, wherein, in the fifth step, the separating of the positive electrode active material from the second treatment solution is performed by filtering the second treatment solution.

11. The method of claim 1, further comprising a step of washing and drying the positive electrode active material separated from the second treatment solution after the fifth step.

12. The method of claim 1, wherein the sixth step is performed by performing a fractional distillation on the third treatment solution.

13. The method of claim 1, wherein the organic solvent obtained in the sixth step is reused in the first step.
